# EUROPEAN PATENT SPECIFICATION

(11) **EP 2 410 805 B1**
(45) Date of publication and mention of the grant of the patent: **22.01.2020**
(21) Application number: 10753446.3
(22) Date of filing: 10.03.2010
(51) Int. Cl.: H04L 5/00, H04L 27/26

(54) **COMMUNICATION SYSTEM, COMMUNICATION APPARATUS, AND FREQUENCY ALLOCATION METHOD**
KOMMUNIKATIONSSYSTEM, KOMMUNIKATIONSGERÄT UND FREQUENZZUWEISUNGSVERFAHREN
SYSTÈME DE COMMUNICATION, APPAREIL DE COMMUNICATION, ET PROCÉDÉ D'ALLOCATION DE FRÉQUENCES

(30) Priority: 17.03.2009 JP 2009064671
(43) Date of publication of application: 25.01.2012
(73) Proprietor: Mitsubishi Electric Corporation, Tokyo 100-8310 (JP)
(72) Inventor: HIGASHINAKA, Masatsugu, Tokyo 100-8310 (JP); NAKAJIMA, Akinori, Tokyo 100-8310 (JP)
(74) Representative: Pfenning, Meinig & Partner mbB
(86) International application number: PCT/JP2010/054041
(87) International publication number: WO 2010/106954

(56) References cited:
- WO-A1-2007/082754
- JP-A- 2002 315 049
- SHARP: "Resource allocation types and DCI formats for the LTE-A UL", 3GPP DRAFT; R1-090700, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318571, [retrieved on 2009-02-03]
- PANASONIC: "System performance of uplink non-contiguous resource allocation", 3GPP TSG RAN WG1 MEETING #55 R1-084224,, 10 November 2008 (2008-11-10), pages 1-5, XP008147904,
- SHARP: "Remaining issues on the Uplink transmission scheme", 3GPP DRAFT; R1-090021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050317969, [retrieved on 2009-01-07]
- SHARP: "Uplink Multiple Access Scheme for LTE-Advanced", 3GPP TSG RAN WG1 MEETING #54 R1-082787,, 18 August 2008 (2008-08-18), pages 1-4, XP008140927,
- Hyung G Myung ET AL: "Single Carrier FDMA: A New Air Interface for Long Term Evolution" In: "Single Carrier FDMA: A New Air Interface for Long Term Evolution", 20 November 2008 (2008-11-20), John Wiley & Sons, XP055224280, * Sections 3-5; page 37 - page 105 *
- "3rd Generation Partnership Project; Technical Specification Group Radio Access Network; Evolved Universal Terrestrial Radio Access (E-UTRA); Physical layer procedures (Release 8)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 September 2008 (2008-09-01), pages 1-63, XP050377559,
- NEC GROUP ET AL: "Uplink Resource Allocation for E-UTRA", 3GPP DRAFT; R1-062773, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103261, [retrieved on 2006-10-04]
- NEC GROUP: "DL Unicast Resource Allocation Signalling using L1L2 control channels", 3GPP DRAFT; R1-072832, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070620, 20 June 2007 (2007-06-20), XP050106513, [retrieved on 2007-06-20]

## Description

### Field

The present invention relates to a communication system, a communication apparatus, and a frequency allocation method which allocate frequency bands for use in data transmission.

### Background

As a scheme of signal transmission for digital wireless communications, there has been known SC-FDMA (Single Carrier Frequency Division Multiple Access) which is capable of high transmission power efficiency and high frequency use efficiency. SC-FDMA achieves transmission power efficiency higher than that of multi-carrier transmission schemes such as OFDMA (Orthogonal Frequency Division Multiple Access) by allocating data signals continuously on the frequency axis. For example, SC-FDMA is employed as the uplink (line for transmission from a user terminal to a base station) wireless access scheme of LTE (Long Term Evolution) which is currently under review in 3GPP (3rd Generation Partnership Project) as a successor to HSDPA (High Speed Downlink Packet Access) and other mobile communication systems of cellular type.

In general, when a user terminal transmits data over an uplink, the user terminal initially transmits a data transmission request to a base station. Receiving the data transmission request, the base station notifies the user terminal of wireless resources to permit use of. In the case of SC-FDMA, the frequency bands available for data transmission, the slots in the time domain, and the like are notified. Receiving the notification of the use permission of the wireless resources from the base station, the user terminal transmits data by using the designated wireless resources.

In an SC-FDMA based system, the notification of use-permitted wireless resources from a base station to a user terminal can be made, for example, by the method disclosed in Non Patent Literature 1 listed below. According to the method disclosed in the following Non Patent Literature 1, the base station determines the frequency bandwidth to permit the user terminal to use and the start frequency position of the same, and generates from such values a control signal for designating the wireless resources to permit the use of.

Specifically, the base station transmits a signal expressed by N_{RB}^{UL}(L_{CRBs} - 1) + RB_{START} if (L_{CRBs} - 1) / [N_{RB}^{UL} / 2] is satisfied ([x] is the maximum integer smaller than or equal to x), and transmits a signal expressed by N_{RB}^{UL}(N_{RB}^{UL} - L_{CRBs} + 1) + (N_{RB}^{UL} - 1 - RB_{START}) if not, where L_{CRBs} is the frequency bandwidth to permit the user terminal the use of, RB_{START} is the start position of the frequency band to permit the use of, and N_{RB}^{UL} is the system bandwidth. In the following Non Patent Literature 1, frequencies are expressed in units called resource blocks which are groups of a plurality of sub carriers. The user terminal receives the control signal to find out the frequencies allocated by the base station.

Document SHARP: " Resource allocation types and DCI formats for the LTE-A UL", 3GPP DRAFT; R1-090700, 3RD GENERATION PARTNERSHIP PROJECT (3GPP), MOBILE COMPETENCCE CENTRE; 650, ROUTE DES LUCIOLES; F-06921 SOPHIA-ANTIPOLIS CEDEX; FRANCE, describes resource allocation types. The document PANASONIC: "System performance of uplink non-contiguous resource allocation", 3GPP TSG RAN WG1 MEETING #55 R1-084224 deals with system performance of resource allocation.

### Citation List

### Non Patent Literature

Non Patent Literature 1: 3GPP TS36.213 V8.4.0, 3rd Generation Partnership Project; Technical Specification Group Radio Access Network; Evolved Universal Terrestrial Radio Access (E-UTRA); Physical Layer Procedures (Release8), 2008-09

### Summary

### Technical Problem

The foregoing conventional technology, however, is predicated on a wireless access scheme that only performs continuous frequency allocation, such as SC-FDMA. In situations where a wireless access scheme that only performs continuous frequency allocation and a wireless access scheme that allows discrete frequency allocation are both supported, there is thus a problem that the base station needs to perform different processing to notify the wireless resources corresponding to the discrete use of frequencies, with an increase in the amount of processing. In addition, since a notification other than that of continuous frequency allocation is transmitted to notify the wireless resources corresponding to the discrete use of frequencies, there is a problem of low transmission efficiency.

The present invention has been achieved in view of the foregoing, and an object thereof is to provide a communication system, a communication apparatus, and a frequency allocation method which can efficiently generate notifications of wireless resource allocation and improve the transmission efficiency, in the wireless communication system supporting both a wireless access scheme of allocating frequencies continuously and a wireless access scheme that allows discrete frequency allocation.

### Solution to Problem

In order to solve above-mentioned problems and to achieve the object, a communication system according to the present invention including a user terminal and a base station for allocating frequency bands to the user terminal by using a continuous allocation scheme of continuously allocating resource blocks, wherein a single set of resource blocks, which are contiguous on the frequency axis, is allocated to the user terminal, and a discrete allocation scheme of discretely allocating resource blocks for data transmission, wherein each sub-block is composed of a number of resource blocks, and the discrete allocation is such that each sub-block consists of resource blocks which are contiguous on the frequency axis, and the interval between sub-blocks is at least one resource block. The base station informs a control signal for indicating one allocation scheme selected from the continuous allocation scheme and the discrete allocation scheme, and indicating locations of two sub-blocks on a frequency axis when the discrete allocation scheme is indicated, wherein each sub-block comprises two or more resource blocks and the sub-blocks are separated by an interval of at least one resource block, and the user terminal performs data transmission based on the control signal informed from the base station. The resource blocks allocated to the user terminal are indicated with a first number of bits of the control signal and a switching between the continuous allocation scheme and the discrete allocation scheme is indicated with another bit of the control signal, wherein the discrete allocation scheme is only allowed if the number of allocated resource blocks is greater than a first threshold and smaller than a second threshold. Advantageous Effects of Invention

According to the present invention, in the present embodiment, restrictions are imposed on the number of division of resource blocks to be allocated, etc., when allocating frequencies discretely. Given a wireless access scheme that allows both continuous frequency allocation and discrete frequency allocation, there is provided the effect that it is possible to efficiently generate notifications of the allocation of wireless resources and improve the transmission efficiency.

### Brief Description of the Drawings

FIG. 1 is a diagram showing an example of the functional configuration of a first embodiment of a user terminal according to the present invention.
FIG. 2 is a diagram showing an example of the configuration of the system frequency of a communication system according to the first embodiment.
FIG. 3 is a chart showing an example of the procedure for starting transmission.
FIG. 4 is a diagram showing an example of frequencies allocated, represented on a frequency axis.
FIG. 5 is a chart showing an example of the correspondence between the value indicated by the control signal and the mode of resource block allocation in the case of continuous allocation.
FIG. 6 is a chart showing an example of the correspondence between the value indicated by the control signal and the mode of resource block allocation in the case of continuous allocation.
FIG. 7 is a chart showing an example of the correspondence between the value indicated by the control signal and the mode of resource block allocation in the case of continuous allocation.
FIG. 8 is a chart showing an example of the correspondence between the value indicated by the control signal and the mode of resource block allocation in the case of continuous allocation.
FIG. 9 is a chart showing an example of the correspondence between the value of the control signal and the mode of allocation in the case of allocating resource blocks discretely.
FIG. 10 is a chart showing an example of the correspondence between the value of the control signal and the mode of allocation in the case of allocating resource blocks discretely.
FIG. 11 is a chart showing an example of the correspondence between the value of the control signal and the mode of allocation in the case of allocating resource blocks discretely.
FIG. 12 is a chart showing an example of the correspondence between the value of the control signal and the mode of allocation in the case of allocating resource blocks discretely.
FIG. 13 is a diagram showing an example of reference sub block positions for use in the frequency allocation method according to a second embodiment.
FIG. 14 is a chart showing an example of the correspondence between an offset and two bits of control signal for one sub block.

### Description of Embodiments

Hereinafter, embodiments of the communication system, the communication apparatus, and the frequency allocation method according to the present invention will be described in detail on the basis of the drawings. It should be noted that the present invention is not limited by the embodiments. The invention is defined and limited by the scope of appended claims 1-4. In the following description, any embodiment(s) referred to and not falling within the scope of the appended claims, is (are) merely example(s) useful to the understanding of the invention.

### First Embodiment

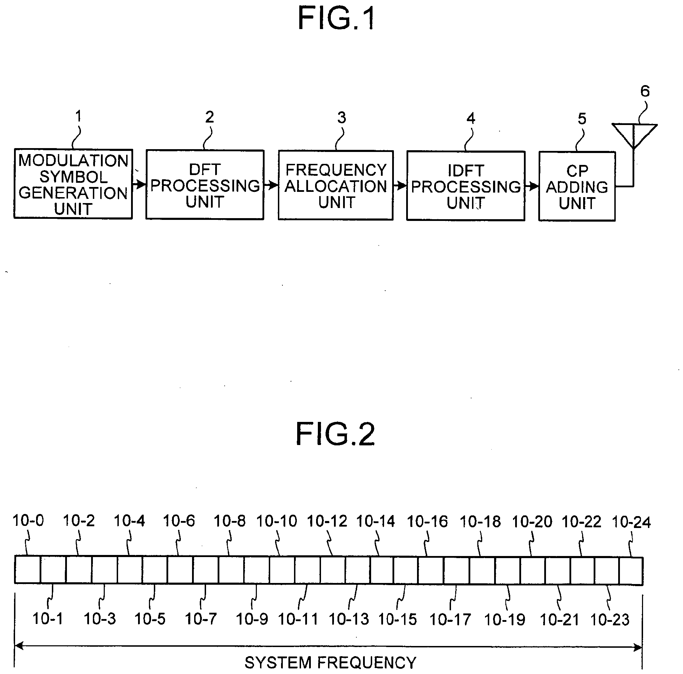

FIG. 1 is a diagram showing an example of the functional configuration of a first embodiment of a user terminal according to the present invention. In the present embodiment, a base station and the user terminal shall constitute a communication system, and the base station shall allocate frequencies to the user terminal. Here, a description will be given of an example where the user terminal or the base station functions as the communication apparatus according to the present invention. As shown in FIG. 1, the user terminal according to the present embodiment includes a modulation symbol generation unit 1, a DFT (Discrete Fourier Transform) processing unit 2, a frequency allocation unit 3, an IDFT (Inverse DFT) processing unit 4, a CP (Cyclic Prefix) adding unit 5, and a transmission antenna 6.

FIG. 2 is a diagram showing an example of the configuration of the system frequency of the communication system according to the present embodiment. Resource blocks 10-1 to 10-24 in FIG. 2 each represent a resource block consisting of a plurality of subcarriers, and correspond to lower to higher frequencies in order from the left. In the following description, the system frequency shall include 300 subcarriers, with 12 subcarriers as a single resource block. That is, the system frequency includes 25 resource blocks. The frequency allocation shall be performed in units of resource blocks. Such a configuration is exemplified by that of the system frequency 5 MHz in LTE which is currently under review in 3GPP.

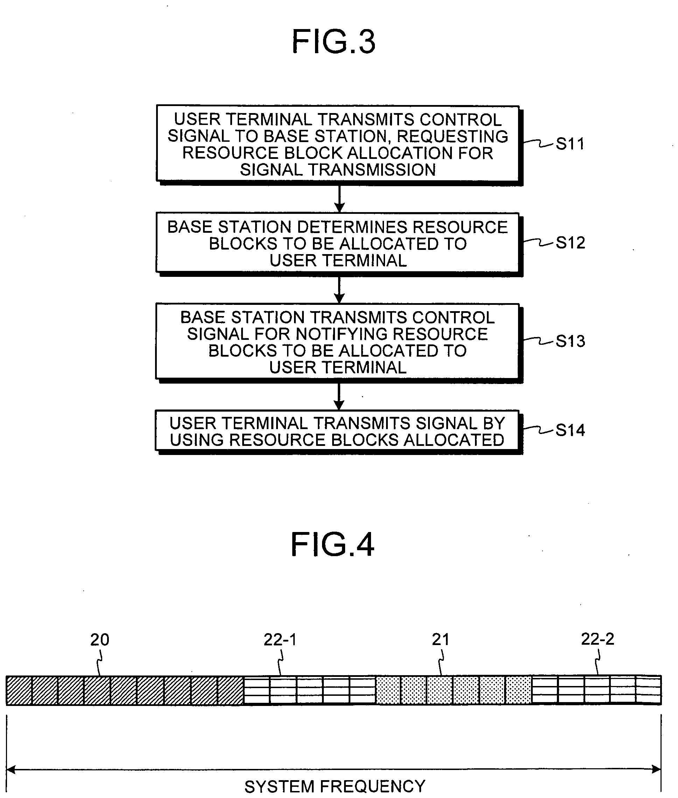

FIG. 3 is a chart showing an example of the procedure (procedure for starting transmission) in which the user terminal according to the present embodiment generates data to transmit and transmits the data signal through the uplink. The user terminal generates the data to transmit, and transmits a control signal to the base station, requesting the allocation of uplink resource blocks for data signal transmission (step S11). The format of the control signal and the method of signal transmission may be of any technique as long as the scheme is determined in advance and the base station can be identified. For example, in an applicable format, a one-bit control signal may be transmitted through a channel dedicated to the control signal, where bit values 0 and 1 are used to indicate the presence or absence of a request for resource block allocation. Otherwise, the control signal may be multiplexed and transmitted with the data signal.

Receiving the control signal sent from the user terminal, which requests the allocation of uplink resource blocks, the base station determines resource blocks to permit the use of (allocate) to the originating user terminal for uplink data transmission (step S12). The scheme of allocation here is not limited to one for allocating the resource blocks to permit the use of to one user terminal continuously on the frequency axis, but may be one for allocating the resource blocks discretely on the frequency axis. The specific method of allocation will be described later.

Having determined the resource blocks to allocate to the user terminal, the base station transmits to the user terminal a control signal for notifying the user terminal of the resource blocks allocated (step S13). The control signal may be transmitted, for example, by establishing a channel dedicated to the control signal among downlinks for transmitting signals from the base station to the user terminal, and transmitting the control signal through the channel dedicated to the control signal. The specific configuration of the control signal will be described later.

The user terminal receives the control signal for notifying the allocated resource blocks, and grasps the resource blocks allocated to the own terminal for uplink data transmission on the basis of the control signal. The user terminal then performs data transmission by using the allocated resource blocks (step S14).

Next, returning to FIG. 1, the operation of the user terminal according to the present embodiment will be described. The modulation symbol generation unit 1 generates modulation symbols corresponding in number to the resource blocks allocated by the base station. For example, if five resource blocks are allocated, the modulation symbol generation unit 1 generates 60 modulation symbols since one resource block consists of 12 subcarriers. The generated modulation symbols are transferred to the DFT processing unit 2.

The DFT processing unit 2 performs DFT (Discrete Fourier Transform) on the modulation symbols transferred from the modulation symbol generation unit 1, with the same size as that of the modulation symbols, to generate frequency resources of the modulation symbols. The frequency resources of the modulation symbols are transferred to the frequency allocation unit 3.

The frequency allocation unit 3 generates a signal in which the frequency resources are allocated to the allocated resource blocks, on the basis of the result of allocation of the resource blocks notified from the base station. Specifically, if the allocated resource blocks are arranged continuously on the frequency axis, the frequency allocation unit 3 performs processing to allocate the frequency resources to the notified resource blocks. On the other hand, if the allocated resource blocks are arranged discretely on the frequency axis, the frequency allocation unit 3 divides the frequency resources into predetermined sizes so as to fit to the allocated resource blocks, thereby generating sub blocks. The frequency allocation unit 3 then performs processing to allocate the generated sub blocks to the resource blocks. The signal generated by the frequency allocation unit 3 is transferred to the IDFT processing unit 4.

The IDFT processing unit 4 performs IDFT (Inverse Discrete Fourier Transform) on the signal transferred from the frequency allocation unit 3 to generate transmission blocks in the time domain. Here, the IDFT size is greater than or equal to the DFT size of the DFT processing unit 2. Possible sizes are determined in advance according to the bandwidth of the system frequency. The transmission blocks in the time domain are transferred to the CP adding unit 5.

The CP adding unit 5 performs processing to add CPs to the transmission blocks in the time domain. Specifically, the CP adding unit 5 duplicates the last parts of the transferred transmission blocks in the time domain and adds the duplications to the top of the transmission blocks in the time domain. The CP-added transmission blocks are transmitted from the transmission antenna 6.

Next, a description will be given of the method by which the base station determines the resource blocks to permit the use of to the user terminal, i.e., allocates the resource blocks. In the present embodiment, in order to reduce the amount of processing of the user terminal during the DFT-based generation of the transmission signal, a constraint is imposed on the total number of allocated resource blocks when the base station determines the number of resource blocks to allocate to the user terminal. Specifically, the total numbers of allocated resource blocks possible are only those that satisfy 2^{a} × 3^{b} × 5^{c} (a, b, and c are a nonnegative integer each).

When allocating resource blocks to the user terminal continuously on the frequency axis, the base station determines the number of resource blocks to be allocated and the positions of the same on the frequency axis. On the other hand, when allocating resource blocks to the user terminal discretely on the frequency axis, the base station determines the number of resource blocks to be allocated, the number of sub blocks into which the resource blocks to be allocated are divided, the sizes of the sub blocks, and the positions of the respective sub blocks on the frequency axis.

The frequencies to be allocated to the user terminal may be determined according to an arbitrary criterion. Examples include the following: the user terminal periodically transmits a known reference signal, and the base station measures the transmission channel characteristics of the uplink on the basis of the reference signal and allocates frequencies of favorable SNR (Signal to Noise power Ratio) or SINR (Signal to Interference plus Noise power Ratio) corresponding to the allocation-requesting user terminal; and user terminals that request frequency allocation are sorted by priority, and frequencies are allocated to the user terminals of higher priority first.

FIG. 4 is a diagram showing an example of frequencies that are allocated by the base station to user terminals, represented on the frequency axis. Suppose here that there are three user terminals (user terminals #1 to #3) to which the base station allocates the uplink frequencies. In FIG. 4, the frequency 20 represents the frequencies that are allocated to the user terminal #1, the frequency 21 represents those allocated to the user terminal #2, the frequencies 22-1 and 22-2 represents those allocated to the user terminal #3. In this example, nine and six resource blocks are allocated to the user terminal #1 and the user terminal #2 continuously on the frequency axis, respectively. As shown by the frequencies 22-1 and 22-2, the user terminal #3 is allocated ten resource blocks, which are divided into two sub blocks each consisting of five resource blocks at separate positions in the frequency domain.

Here, in the present embodiment, the base station shall have a predetermined condition as to whether or not to perform discrete allocation. Specifically, only if the size of the allocated resource blocks is greater than a threshold A and smaller than a threshold B, discrete frequency allocation shall be allowed. That is, the allocated resource blocks can be divided into sub blocks. It should be appreciated that the resource blocks to be allocated are determined on the basis of allocation requests from the user terminals, the priority of the user terminals, etc. Here, the threshold A and the threshold B are integers greater than 0 and smaller than the number of resource blocks in the system frequency, and A < B.

The threshold A is a constant for avoiding discrete frequency allocation when the size of the allocated resource blocks is small. Similarly, the threshold B is a constant for avoiding discrete frequency allocation when the size of the allocated resource blocks is large. In general, allowing the discrete allocation of frequencies to user terminals makes flexible frequency allocation feasible and consequently increases the transmission efficiency as compared to the case where the frequencies are allocated continuously. Since adjacent resource blocks have a high correlation in transmission channel condition, however, the discrete allocation of frequencies has only a small effect in improving the transmission efficiency if the size of the allocated resource blocks is small. On the other hand, if the size of the allocated resource block is large and close to the total number of resource blocks that constitute the system frequency, the sub blocks would come very close to each other on the frequency axis even if the discrete frequency allocation is applied. In such a case, the application of the discrete frequency allocation has again only a small effect in improving the transmission efficiency.

The threshold A and the threshold B can be determined system by system so as to exclude the sizes of allocated resource blocks at which the application of the discrete frequency allocation will not have much effect in improving the transmission efficiency. In the present embodiment, where the total number of resource blocks constituting the system frequency is 25, the discrete allocation of resource blocks is allowed if the size of the allocated resource blocks is greater than or equal to 10 and smaller than or equal to 18. That is, A = 9 and B = 19.

When dividing the allocated resource blocks into sub blocks, the base station of the present embodiment limits the number of combinations of sub block division to reduce the amount of processing of the base station and reduce the amount of the control signal when making a notification to the user terminal. Here, as an example, the maximum number of sub blocks divided shall be two. The allocated resource blocks are equally divided so that the sub blocks include the same number of resource blocks each. It should be noted that if the size of the allocated resource blocks is odd-numbered, it is not possible to make the sub blocks equal in size and one sub block is one resource block greater than the other.

When determining the arrangement of the sub blocks on the frequency axis, the base station shall also impose a constraint on the interval between the sub blocks in order to reduce the amount of processing for determining the arrangement of the sub blocks and reduce the amount of the control signal when notifying the user terminal of the result of sub block allocation. Here, the interval between the sub blocks shall be determined in units of two resource blocks. It should be noted that if either one or both of the sub blocks are allocated to come to the end(s) of the system frequency, the interval may be determined in units of one resource block.

Having determined the resource blocks to allocate to the user terminals, the base station transmits control signals for notifying the user terminals of the result of allocation. In the present embodiment, the same control signal is used to provide designation for both when allocating resource blocks continuously to a user terminal and when allocating resource blocks discretely to a user terminal.

When allocating resource blocks continuously to a user terminal, the base station determines the number of resource blocks to be allocated and the start position of the resource blocks to be allocated on the frequency axis, and generates a control signal that includes such values. Specifically, the base station transmits a control signal expressed by N_{RB}^{UL}(L_{CRBs} - 1) + RB_{START} if (L_{CRBs} - 1) / [N_{RB}^{UL} / 2] is satisfied, and transmits a control signal expressed by N_{RB}^{UL}(N_{RB}^{UL} - L_{CRBs} + 1) + (N_{RB}^{UL} - 1 - RB_{START}) if not, where L_{CRBs} is the number of allocated resource blocks, RB_{START} is the start position of the allocated resource blocks on the frequency axis, and N_{RB}^{UL} is the total number of resource blocks within the system frequency. In the present embodiment, N_{RB}^{UL} = 25 since the system frequency includes 25 resource blocks.

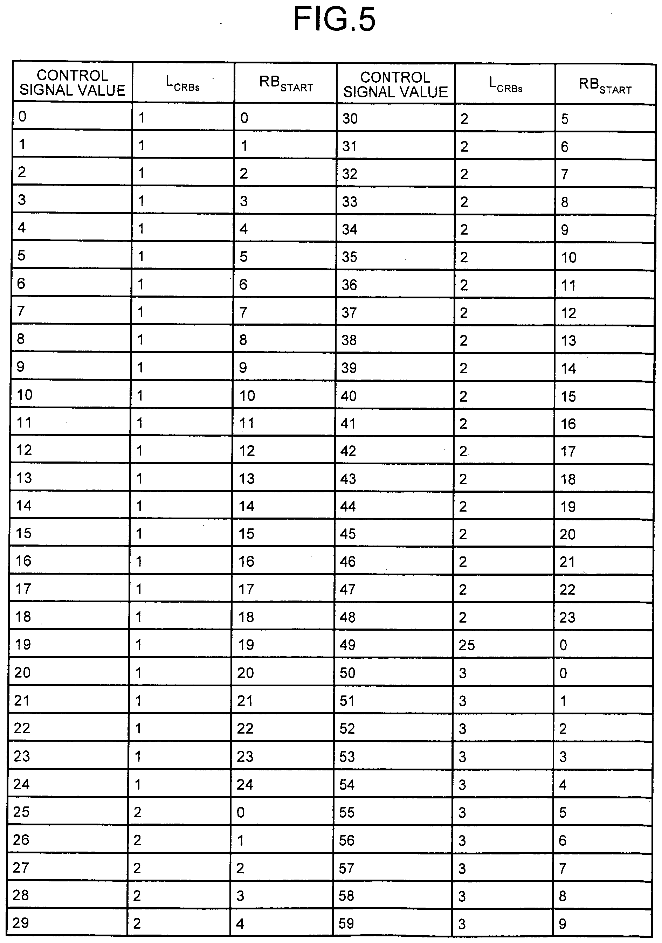

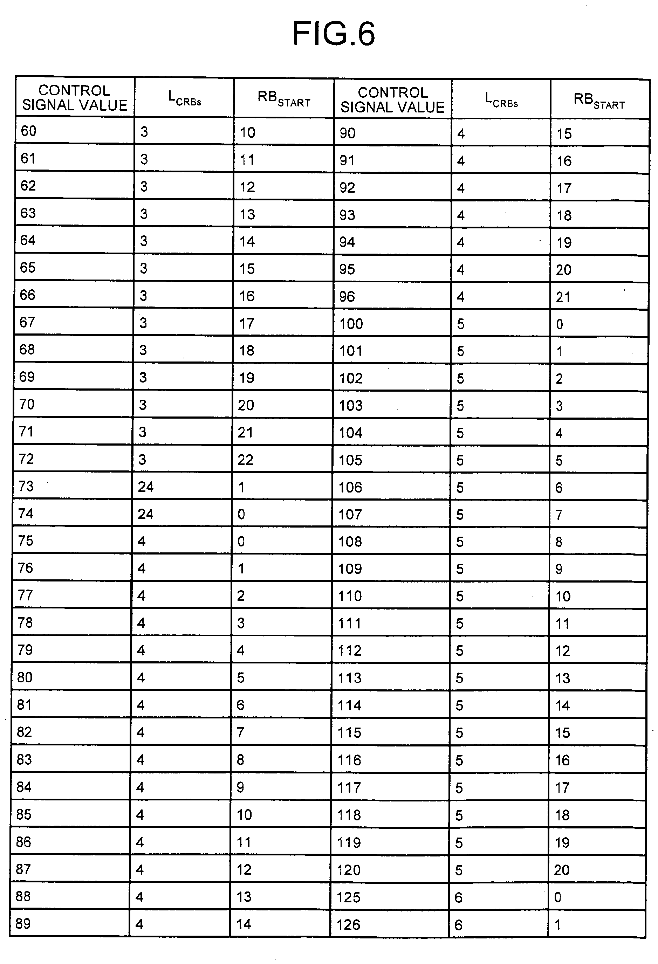

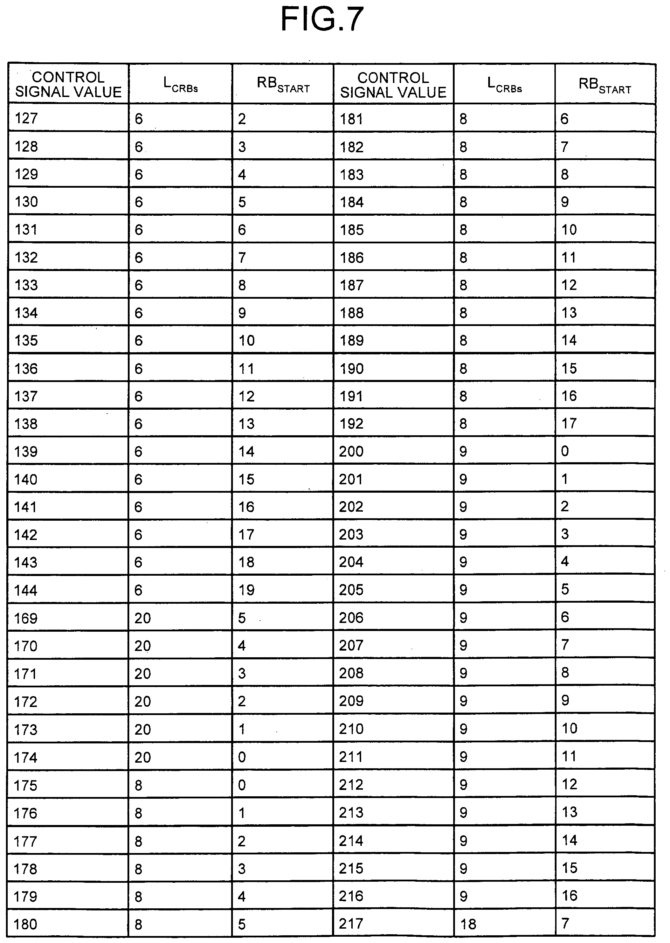

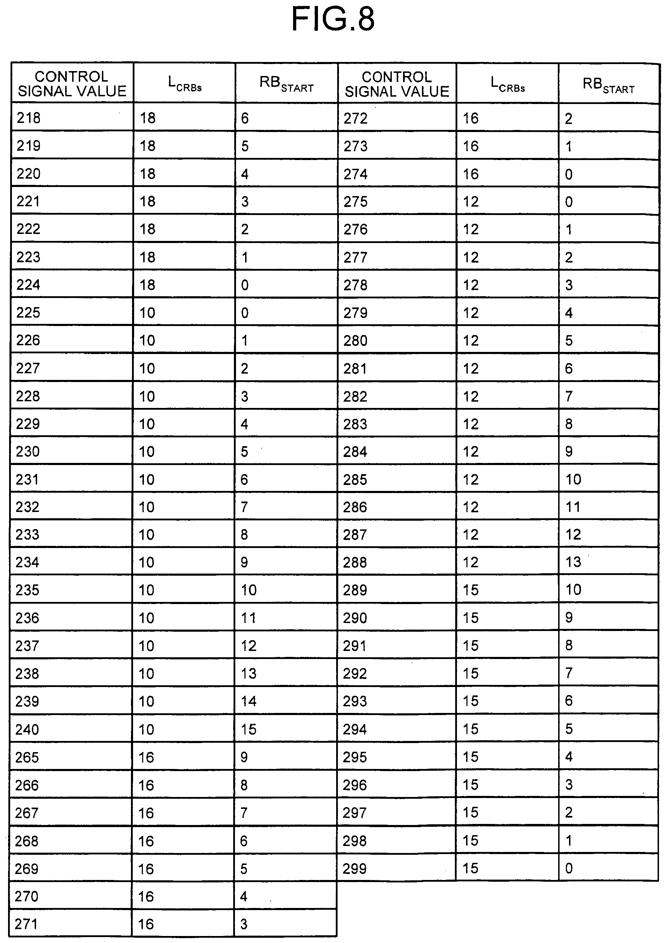

FIGS. 5 to 8 are charts showing an example of the correspondence between the value indicated by the control signal and the mode of resource block allocation in the case of continuous allocation. FIG. 5 shows the cases where the control signal value is 0 to 59. FIG. 6 shows the cases where the control signal value is 60 to 126. FIG. 7 shows the cases where the control signal value is 127 to 217. FIG. 8 shows the cases where the control signal value is 218 to 299. FIGS. 5 to 8 show both L_{CRBs} and RB_{START} corresponding to the control signal values. It should be noted that the cases where the total number of allocated resource blocks does not satisfy 2^{a} × 3^{b} × 5^{c} are omitted from FIGS. 5 to 8.

For example, when the control signal has a value of 236, as shown in FIG. 8, the corresponding L_{CRBs} and RB_{START} are 10 and 11, respectively. This means that the resource blocks to be allocated to the user terminal is ten in number, and the resource blocks are continuously allocated from the eleventh resource block on the system frequency. As shown in FIG. 8, the final value of the control signal is 299, which shows that the control signal has only to have nine bits.

In the case of allocating resource blocks discretely to a user terminal, the control signal is also configured so that the mode of sub block allocation on the frequency axis and the value indicated by the control signal correspond to each other on a one-to-one basis. The values of the control signal for the discrete allocation of resource blocks are assigned consecutively to the control signal values for the continuous allocation of resource blocks, expressed by nine bits as described above.

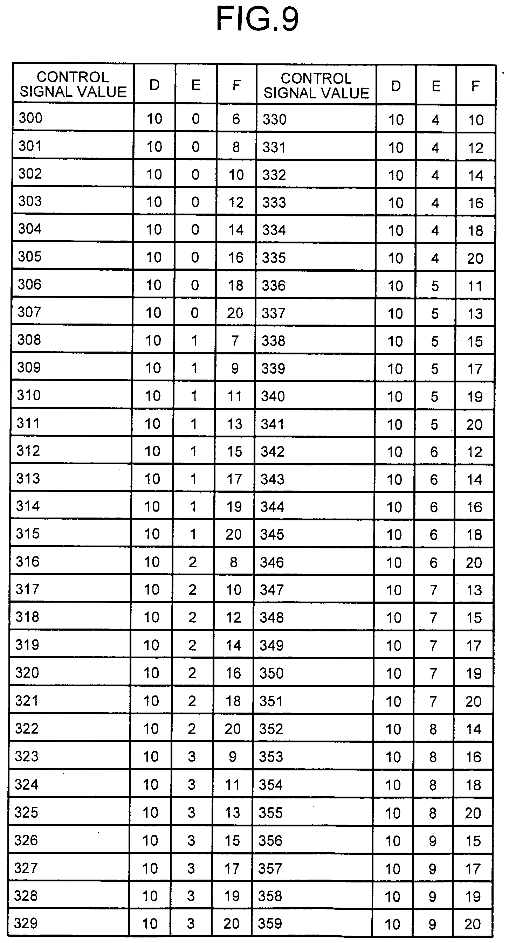

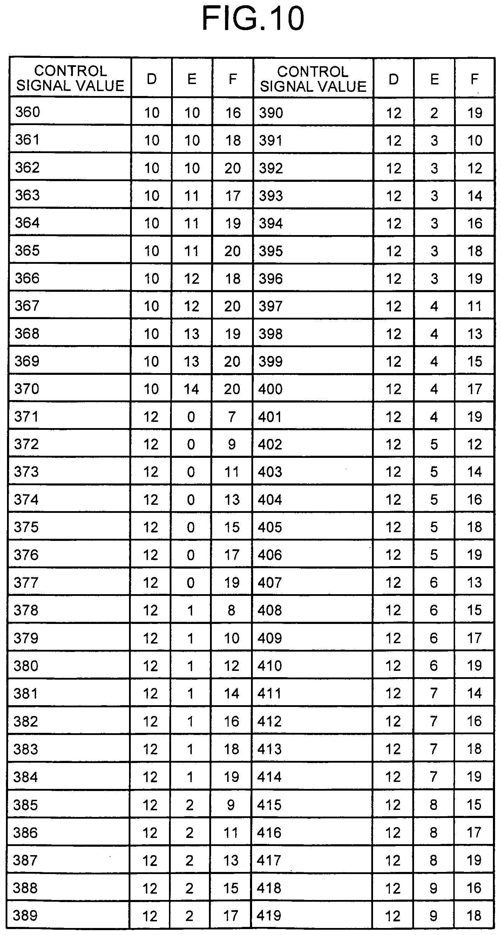

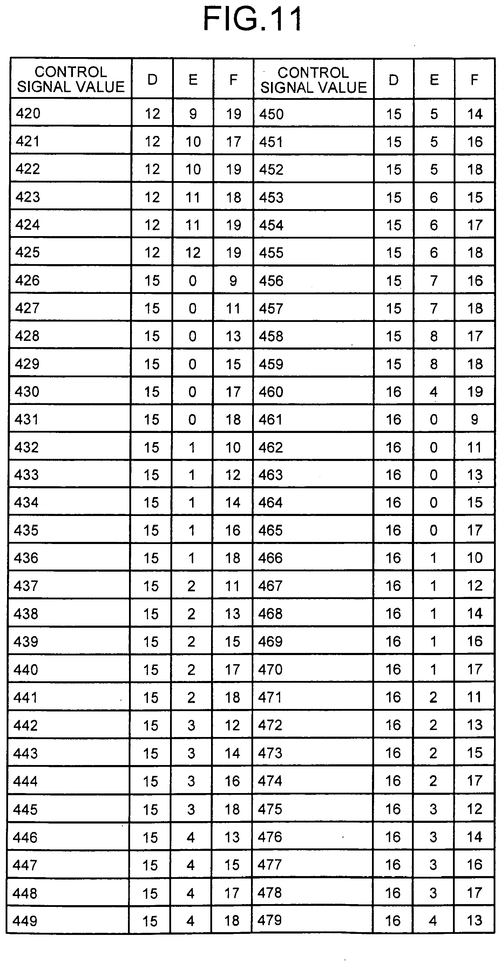

FIGS. 9 to 12 are charts showing an example of the correspondence between the value of the control signal and the mode of allocation when allocating resource blocks discretely to a user terminal. In FIGS. 9 to 12, the item D shows the number of resource blocks allocated to the user terminal. The item E shows the start resource block position of a sub block on the frequency axis, the sub block being one of two sub blocks into which the allocated resource blocks are divided, the one to which lower frequencies are allocated. The item F shows the start resource block position of a sub block on the frequency axis, the sub block being one of the two sub blocks into which the allocated resource blocks are divided, the one to which higher frequencies are allocated.

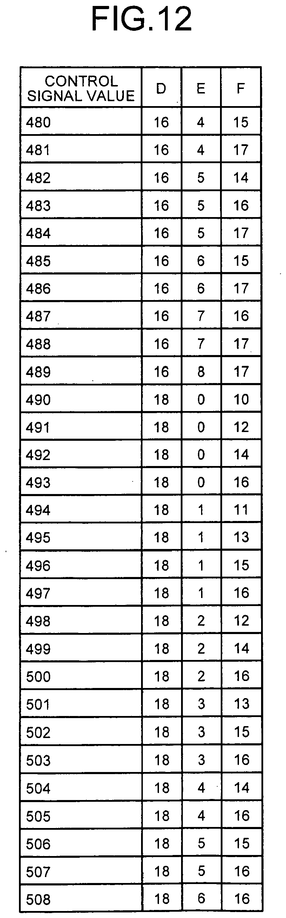

For example, when the control signal has a value of 319, as shown in FIG. 9, the items D, E, and F are 10, 2, and 14 in value. The resource blocks allocated to the user terminal are therefore ten in number. The allocated resource blocks are divided into two blocks (each consisting of five resource blocks), one of which includes five resource blocks that are continuously arranged from the second resource block on the frequency axis. The other includes five resource blocks that are continuously arranged from the fourteenth resource block on the frequency axis. As shown in FIG. 12, the final value of the control signal is 508. The foregoing nine control bits provided for the continuous allocation of resource blocks are thus capable of providing designation for the discrete allocation of resource blocks.

The user terminal stores in advance the correspondence between the control signal values and the mode of allocation shown in FIGS. 5 to 12. Based on the value of the received control signal, the user terminal can grasp the mode of allocation corresponding to the value (the number and arrangement of resource blocks allocated to the own terminal for uplink data transmission).

In the present embodiment, where the system frequency includes 25 resource blocks, the discrete allocation of resource blocks is allowed only when the number of resource blocks allocated to the user terminal is 10 to 18. However, the range of the numbers of allocated resource blocks to allow the discrete allocation of resource blocks is not limited thereto, and may include arbitrary numbers. For example, a stronger constraint such as one that allows the discrete allocation of resource blocks in the range of 12 to 16 blocks can be imposed to reduce the control signal shown in FIGS. 5 to 12. Moreover, a weaker constraint such as one that allows the discrete allocation of resource blocks in the range of 8 to 20 blocks can be imposed to enhance the flexibility of resource block allocation for higher transmission performance.

In the present embodiment, the range to allow the discrete allocation of resource blocks is determined in terms of both the upper limit and lower limit (A and B). This is not restrictive, and either the upper limit (B) or the lower limit (A) alone may be determined.

In the present embodiment, after the division of the allocated resource blocks into sub blocks, the interval between the sub blocks can be determined in units of two resource blocks when determining the arrangement of the sub blocks on the frequency axis. However, the unit of the interval between the sub blocks is not limited thereto, and may be an arbitrary value. For example, with one resource block as a unit, the arrangement of the sub blocks can be finely controlled for improved transmission efficiency. With three or more resource blocks as a unit, the amount of the control signal can be reduced more significantly than illustrated in the present embodiment.

The interval between sub blocks may be changed depending on the number of resource blocks allocated. For example, the correspondence between the number of allocated resource blocks and the unit of the sub block interval is defined in advance, like the sub block interval be determined in units of two resource blocks if the number of allocated resource blocks is 10 or 12, and the sub block interval be determined in units of four resource blocks if the number of allocated resource blocks is 15, 16, and 18. When changing the unit of the sub block interval depending on the number of resource blocks, the correspondence between the number of resource blocks and the unit of the sub block interval shall also be retained in the user terminal. Otherwise, the sub block interval may be determined by defining a minimum sub block interval in advance and always arranging the sub blocks apart from each other by the minimum sub block interval or more.

The present embodiment has dealt with the case where the number of resource blocks in the system frequency is 25. This is not restrictive, however. For example, the method of allocation described in the present embodiment may be applied as-is to situations where the number of resource blocks is 50, 100, and so on, which are defined as LTE systems under review in 3GPP.

In the present embodiment, there are prepared nine bits of control signal so that both the cases where resource blocks are continuously allocated and where resource blocks are discretely allocated can be designated by the nine bits. However, in a possible configuration, for example, a bit for switching between continuous allocation and discrete allocation may be separated from bits that describe the specific designation as to the mode of allocation of the resource blocks.

In the present embodiment, the possible numbers of allocated resource blocks are limited to when 2^{a} × 3^{b} × 5^{c} is satisfied. This is not restrictive, however, and the present invention may be applied to other cases. The number of subcarriers included in a resource block is not limited to twelve as illustrated in the present embodiment, either, and may be an arbitrary value.

It should be noted that while the present embodiment is configured so that the base station allocates uplink frequencies to the user terminal and notifies the user terminal of the result of allocation, the communication system of the present invention is not limited thereto. For example, in a possible configuration, the transmitter which transmits the request for resource allocation (corresponding to the user terminal in the present embodiment) may determine desired resource blocks for data transmission by using the method of frequency allocation that the base station of the present embodiment performs. The result may be notified to the receiver (the base station in the present embodiment) by using the same control signal as the one for notifying the result of allocation, described in the present embodiment.

Here, the control signal for notifying the frequency allocation from the transmitter to the receiver may use any method of notification. For example, a channel for control signal transmission may be used to make a notification to the receiver prior to data transmission. The transmitter may transmit the control signal simultaneously with data transmission, and the receiver, receiving the data, may initially extract the control signal to check the frequency allocation before demodulating the transmitted data on the basis of the allocation. In such a case, the transmitter may have the same configuration as that of the user terminal of the present embodiment. For example, the frequency allocation unit 3 may perform the frequency allocation by the method of allocation that the base station of the present embodiment performs, thereby generating the control signal. Control signal generating means for generating the control signal may be provided separately.

As seen above, according to the present embodiment, the base station is capable of both the format where resource blocks are allocated to the user terminal continuously on the frequency axis and the format where resource blocks are allocated discretely. For discrete allocation, the base station sets the number of division of resource blocks to allocate to two, divides the resource blocks into sub blocks of equal sizes, and determines the interval between the sub blocks in units of two resource blocks. This can reduce the amount of processing for determining discrete arrangement when the base station determines the resource blocks to allocate to the user terminal. It is also possible to reduce the amount of the control signal when notifying the user terminal of the allocated resource blocks, whereby favorable transmission efficiency can be achieved with small overhead.

When allocating resource blocks to the user terminal, the base station determines whether or not to allow the discrete allocation of resource blocks on the basis of the resource blocks to allocate. It is possible to avoid discrete allocation when the discrete arrangement will not have much effect.

### Second Embodiment

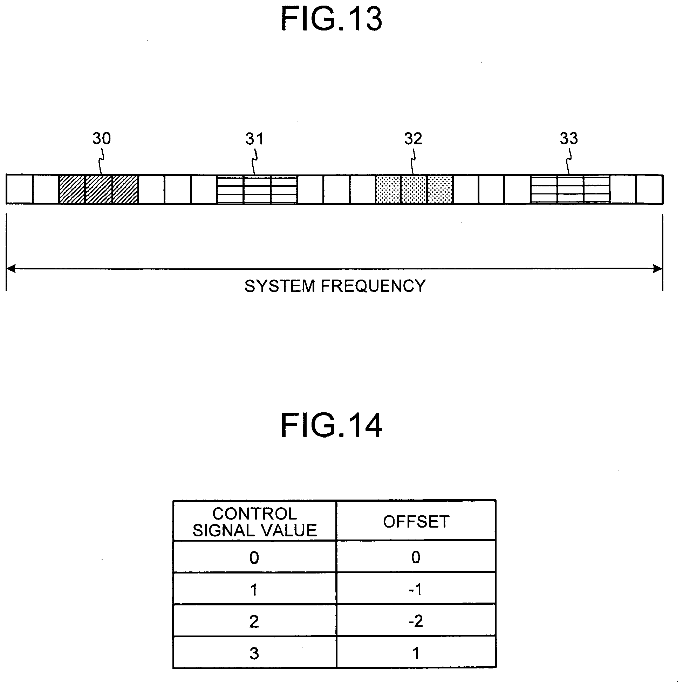

FIG. 13 is a diagram showing an example of reference sub block positions for use in the frequency allocation method according to a second embodiment of the present invention. The configuration of the communication system, the configuration of the user terminal, and the configuration of the base station according to the present embodiment are the same as in the first embodiment. In the present embodiment, the base station divides resource blocks into up to four sub blocks when performing discrete frequency allocation to the user terminal. With the division into four sub blocks, the base station allocates frequencies by using predetermined reference sub block positions such as shown in FIG. 13. The present embodiment and the first embodiment differ in the number of division of sub blocks into which the allocated resource blocks are divided, the method of allocation of the sub blocks on the frequency axis, and the control signal for notifying the user terminal of the result of resource block allocation. In other respects, the present embodiment is the same as the first embodiment. Hereinafter, the differences from the first embodiment will be described.

The base station receives a request for resource block allocation from the user terminal, and determines resource blocks to be allocated. Here, any one of the following three methods may be used, including: a method in which the allocated resource blocks are arranged continuously on the frequency axis; one in which the allocated resource blocks are divided into two sub blocks and the sub blocks are arranged discretely on the frequency axis; and one in which the allocated resource blocks are divided into four sub blocks and the sub blocks are arranged discretely on the frequency axis. In other words, according to the present embodiment, the third one of the three methods of resource block allocation, of dividing the allocated resource blocks into four sub blocks and arranging the sub blocks discretely on the frequency axis, is added to the first embodiment. Hereinafter, these three methods will be referred to as continuous arrangement, two-way split arrangement, and four-way split arrangement in order from the first. The sub blocks divided shall have the same size. Note that if the number of allocated resource blocks is not divisible by the number of sub blocks, some sub blocks may have a different size by one resource block.

As with the first embodiment, the base station of the present embodiment shall determine whether or not to allow discrete allocation on the basis of the total number of resource blocks to be allocated to the user terminal. When performing allocation of continuous arrangement on the user terminal and when performing allocation of two-way split arrangement on the user terminal, the base station determines the positions of the resource blocks by the same method as described in the first embodiment.

When performing allocation of four-way split arrangement on the user terminal, the base station determines the positions of the respective sub blocks on the frequency axis by determining offsets to the reference sub block positions which are previously determined for the respective sub blocks divided. In FIG. 13, reference sub blocks 30 to 33 show an example of the reference sub blocks that are arranged in the reference sub block positions. Each single square in the diagram represents a resource block. The ones filled with the same color represent an identical sub block. The reference sub block positions are defined, for example, in terms of the start positions or center positions of the reference sub blocks. Here, the reference sub block positions shall be the start positions (the positions of the lowest frequencies) of the reference sub blocks. FIG. 13 shows an example where the number of allocated resource blocks is 12 and the number of division of sub blocks is four. In such a case, since the number of allocated resource blocks is 12 and the number of division of sub blocks is four, the sub block size is three resource blocks. The base station sets reference sub block positions such as in FIG. 13 in advance, with respect to each number of allocated resource blocks and each number of division of sub blocks. The user terminal shall have been informed of the reference sub block positions, for example, by an advance notification or the like from the base station.

For four-way split arrangement allocation, in order to determine the position of each sub block on the frequency axis to be allocated to the user terminal sub block by sub block, the base station determines offsets which are the differences between candidates of allocation positions (on the frequency axis) or candidate positions of the sub block and reference sub block positions closest to the positions. The base station selects a candidate position such that the offset satisfies a predetermined condition, thereby determining the selected candidate position as the position of the sub block for actual allocation. Here, the offset condition may be determined resource block by resource block in advance, or may be determined as a condition on the offset of a plurality of resource blocks in advance. A predetermined offset may be used exclusively.

Specifically, for example, the start position of the sub block that is allocated to a lowest frequency is determined as a candidate position (in units of resource blocks). The start position of the reference sub block 30 (in units of resource blocks) is subtracted from the candidate position to determine the offset. That is, with an offset of "1," the candidate position is located one resource block on the high frequency side of the reference sub block 30. If the offset condition is determined for each reference sub block, the condition is such that the offset have an absolute value of 2 or less, for example. Since the number of sub blocks to be allocated and the number of reference sub blocks are the same (four each), the sub blocks to be allocated and the reference sub blocks correspond on a one-to-one basis. The offsets of the sub blocks to be allocated are determined by determining differences from the positions of the respective reference sub blocks 30 to 33 in order from the lower frequencies.

Having determined the resource blocks to allocate to the user terminal, the base station transmits a control signal for notifying the user terminal of the result of allocation. In the present embodiment, the control signal described in the first embodiment is used to designate continuous resource block arrangement and two-way split arrangement. The control signal further includes a bit for identifying the dividing method and bits for four-way split arrangement. Specifically, one bit is prepared to distinguish between the case where the number of division of sub blocks is one (corresponding to the case of performing the continuous allocation of resource blocks) or the number of division of sub blocks is two and the case where the number of division of sub blocks is four. In addition, three bits are prepared for indicating which of 10, 12, 15, 16, and 18 the number of allocated resource blocks before the division of sub blocks is, and eight bits are prepared for indicating the foregoing offsets from the reference sub block positions. The offsets from the reference sub block positions use two bits of the control signal per sub block.

FIG. 14 is a chart showing an example of the correspondence between the offset and the two bits of the control signal for one sub block. In FIG. 14, an offset of "-1" shows that the sub block is located at a frequency one resource block lower than the position of the reference sub block on the frequency axis. An offset of "1" shows that the sub block is located at a frequency one resource block higher than the position of the reference sub block on the frequency axis.

In the present embodiment, the number of division of sub blocks for discrete allocation of resource blocks is two or four. However, in a possible configuration, the number of division of sub blocks may be three. In another possible configuration, the number of division of sub blocks may exceed four. Even in such cases, the reference sub block positions may be defined as with four-way split arrangement according to the present embodiment. The sub blocks are arranged on the basis of the offsets from the reference sub block positions, and the offsets are notified in the form of a control signal.

In the present embodiment, the sub block arrangement and the control signal are determined on the basis of the offsets from the reference sub block positions only in the case of four-way split arrangement. This is not restrictive, and reference sub blocks may be similarly used for two-way split arrangement. Otherwise, in the case of four-way split arrangement, only the total number of allocated resource blocks and the start positions of sub blocks as many as the number of sub blocks may be notified without using reference sub blocks, as with the method of two-way split arrangement described in the first embodiment. Allocation and notification may be performed by the same method as described in the first embodiment or in the present embodiment even when the number of division of sub blocks is not two or four.

The arrangement of the reference sub block positions described in the present embodiment is not limited to the example of FIG. 13, either, and any arrangement may be employed. The intervals between the reference sub block positions are not limited in particular, either. The reference sub block positions may be made variable, and may be changed when needed.

In the present embodiment, whether or not to allow discrete arrangement is determined as in the first embodiment. That is, the total numbers of allocated resource blocks at which sub block division can be performed are common to two-way split arrangement and four-way split arrangement. Such numbers need not necessarily be common, and the conditions as to whether or not to allow two-way split arrangement and four-way split arrangement may be respectively different.

As described above, according to the present embodiment, the number of division of sub blocks is set to two or four when the base station allocates resource blocks to the user terminal discretely on the frequency axis. If the number of division of sub blocks is four, the positions of the respective sub blocks are determined on the basis of the predetermined positions of the reference sub blocks during the allocation of resource blocks. The offsets between the sub block positions to be allocated and the reference sub block positions are notified in the form of a control signal. This can suppress the amount of the control signal and increase the number of division of sub blocks for improved transmission efficiency.

### Industrial Applicability

As described above, the communication system, the communication apparatus, and the frequency allocation method according to the present invention are useful for a wireless communication system in which the system frequency band is allocated for a plurality of terminals, and are suited in particular to a wireless communication system in which discrete frequency allocation is performed on a user terminal.

### Reference Signs List

- 1: MODULATION SYMBOL GENERATION UNIT

- 2: DFT PROCESSING UNIT
- 3: FREQUENCY ALLOCATION UNIT
- 4: IDFT PROCESSING UNIT
- 5: CP ADDING UNIT
- 6: TRANSMISSION ANTENNA
- 10-1 to 10-24: RESOURCE BLOCK
- 20, 21, 22-1, 22-2: FREQUENCY
- 30 to 33: REFERENCE SUB BLOCK

## Claims

1. A communication system comprising:
a user terminal; and
a base station adapted to allocate frequency bands to the user terminal by using a continuous allocation scheme of continuously allocating resource blocks (10-1 to 10-24), wherein a single set of resource blocks (10-1 to 10-24), which are contiguous on the frequency axis, is allocated to the user terminal, and a discrete allocation scheme of discretely allocating resource blocks (10-1 to 10-24) for data transmission,
wherein a plurality of sub-blocks are allocated to the user terminal,
wherein each sub-block is composed of a number of resource blocks (10-1 to 10-24), and the discrete allocation is such that each sub-block consists of resource blocks (10-1 to 10-24) which are contiguous on the frequency axis, and the interval between sub-blocks is at least one resource block,
wherein the base station transmits a control signal for indicating one allocation scheme selected from the continuous allocation scheme and the discrete allocation scheme, and indicating locations of two sub-blocks on a frequency axis when the discrete allocation scheme is indicated,
wherein each sub-block comprises two or more resource blocks (10-1 to 10-24) and the sub-blocks are separated by an interval of at least one resource block, and the user terminal performs data transmission based on the control signal received from the base station,
**characterized in that** the resource blocks (10-1 to 10-24) allocated to the user terminal are indicated with a first number of bits of the control signal, and a switching between the continuous allocation scheme and the discrete allocation scheme is indicated with another bit of the control signal and wherein the discrete allocation scheme is only allowed if the number of allocated resource blocks is greater than a first threshold and smaller than a second threshold.

2. A base station adapted to allocate frequency bands to the user terminal by using a continuous allocation scheme of continuously allocating resource blocks (10-1 to 10-24), wherein a single set of resource blocks (10-1 to 10-24), which are contiguous on the frequency axis, is allocated to the user terminal, and a discrete allocation scheme of discretely allocating resource blocks (10-1 to 10-24) for data transmission, wherein a plurality of sub-blocks are allocated to the user terminal, wherein each sub-block is composed of a number of resource blocks (10-1 to 10-24), and the discrete allocation is such that each sub-block consists of resource blocks (10-1 to 10-24) which are contiguous on the frequency axis, and the interval between sub-blocks is at least one resource block, wherein the base station transmits a control signal for indicating one allocation scheme selected from the continuous allocation scheme and the discrete allocation scheme, and indicating locations of two sub-blocks on a frequency axis when the discrete allocation scheme is indicated, wherein each sub-block comprises two or more resource blocks (10-1 to 10-24) and the sub-blocks are separated by an interval of at least one resource block (10-1 to 10-24),
**characterized in that** the resource blocks (10-1 to 10-24) allocated to the user terminal are indicated with a first number of bits of the control signal, and a switching between the continuous allocation scheme and the discrete allocation scheme is indicated with another bit of the control signal and wherein the discrete allocation scheme is only allowed if the number of allocated resource blocks is greater than a first threshold and smaller than a second threshold.

3. A method employed in a base station for allocating frequency bands to the user terminal by using a continuous allocation scheme of continuously allocating resource blocks (10-1 to 10-24), wherein a single set of resource blocks (10-1 to 10-24), which are contiguous on the frequency axis, is allocated to the user terminal, and a discrete allocation scheme of discretely allocating resource blocks (10-1 to 10-24) for data transmission, wherein a plurality of sub-blocks are allocated to the user terminal, wherein each sub-block is composed of a number of resource blocks (10-1 to 10-24), and the discrete allocation is such that each sub-block consists of resource blocks (10-1 to 10-24) which are contiguous on the frequency axis, and the interval between sub-blocks is at least one resource block, wherein
the method includes a step of transmitting a control signal for indicating one allocation scheme selected from the continuous allocation scheme and the discrete allocation scheme, and indicating locations of two sub-blocks on a frequency axis when the discrete allocation scheme is indicated, wherein each sub-block comprises two or more resource blocks (10-1 to 10-24) and the sub-blocks are separated by an interval of at least one resource block (10-1 to 10-24),
**characterized in that**
the resource blocks (10-1 to 10-24) allocated to the user terminal are indicated with a first number of bits of the control signal, and a switching between the continuous allocation scheme and the discrete allocation scheme is indicated with another bit of the control signal and wherein the discrete allocation scheme is only allowed if the number of allocated resource blocks is greater than a first threshold and smaller than a second threshold.

4. A user terminal transmitting data to a base station which allocates frequency bands to the user terminal by using a continuous allocation scheme of continuously allocating resource blocks (10-1 to 10-24), wherein a single set of resource blocks (10-1 to 10-24), which are contiguous on the frequency axis, is allocated to the user terminal, and a discrete allocation scheme of discretely allocating resource blocks (10-1 to 10-24) for data transmission, wherein a plurality of sub-blocks are allocated to the user terminal, wherein each sub-block is composed of a number of resource blocks (10-1 to 10-24), and the discrete allocation is such that each sub-block consists of resource blocks (10-1 to 10-24) which are contiguous on the frequency axis, and the interval between sub-blocks is at least one resource block, wherein the user terminal is adapted to receive a control signal from the base station, the control signal indicating one allocation scheme selected from the continuous allocation scheme and the discrete allocation scheme, and indicating locations of two sub-blocks on a frequency axis when the discrete allocation scheme is indicated, and performs data transmission based on the control signal received from the base station and wherein each sub-block comprises two or more resource blocks (10-1 to 10-24) and the sub-blocks are separated by an interval of at least one resource block (10-1 to 10-24), **characterized in that** the resource blocks (10-1 to 10-24) allocated to the user terminal are indicated with a first number of bits of the control signal, and a switching between the continuous allocation scheme and the discrete allocation scheme is indicated with another bit of the control signal and wherein the discrete allocation scheme is only allowed if the number of allocated resource blocks is greater than a first threshold and smaller than a second threshold.

## Patentansprüche

1. Kommunikationssystem, umfassend:
ein Benutzer-Endgerät; und
eine Basisstation, die ausgelegt ist, dem Benutzer-Endgerät Frequenzbereiche zuzuweisen unter Verwendung eines kontinuierlichen Zuweisungsschemas des kontinuierlichen Zuweisens von Ressourcenblöcken (10-1 bis 10-24),
wobei dem Benutzer-Endgerät eine einzelne Gruppe von Ressourcenblöcken (10-1 bis 10-24), die auf der Frequenzachse zusammenhängend sind, zugewiesen wird, und eines diskreten Zuweisungsschemas des diskreten Zuweisens von Ressourcenblöcken (10-1 bis 10-24) zur Datenübertragung,
wobei dem Benutzer-Endgerät eine Vielzahl von Unterblöcken zugewiesen werden, wobei jeder Unterblock aus einer Anzahl von Ressourcenblöcken (10-1 bis 10-24) zusammengesetzt ist und die diskrete Zuweisung so ist, dass jeder Unterblock aus Ressourcenblöcken (10-1 bis 10-24) besteht, die auf der Frequenzachse zusammenhängend sind, und das Intervall zwischen Unterblöcken zumindest ein Ressourcenblock ist, wobei die Basisstation ein Steuersignal zum Anzeigen eines Zuweisungsschemas, das aus dem kontinuierlichen Zuweisungsschema und dem diskreten Zuweisungsschema ausgewählt ist, und zum Anzeigen von Positionen von zwei Unterblöcken auf einer Frequenzachse überträgt, wenn das diskrete Zuweisungsschema angezeigt wird, wobei jeder Unterblock zwei oder mehr Ressourcenblöcke (10-1 bis 10-24) umfasst und die Unterblöcke durch ein Intervall von zumindest einem Ressourcenblock getrennt sind, und das Benutzer-Endgerät Datenübertragung durchführt auf Grundlage des von der Basisstation empfangenen Steuersignals,
**dadurch gekennzeichnet, dass** die dem Benutzer-Endgerät zugewiesenen Ressourcenblöcke (10-1 bis 10-24) mit einer ersten Anzahl von Bits des Steuersignals angezeigt werden, und ein Schalten zwischen dem kontinuierlichen Zuweisungsschema und dem diskreten Zuweisungsschema mit einem anderen Bit des Steuersignals angezeigt wird, und wobei das diskrete Zuweisungsschema nur zulässig ist, falls die Anzahl der zugewiesenen Ressourcenblöcke größer ist als ein erster Schwellenwert und kleiner ist als ein zweiter Schwellenwert.

2. Basisstation, die ausgelegt ist, dem Benutzer-Endgerät Frequenzbereiche zuzuweisen unter Verwendung eines kontinuierliches Zuweisungsschemas des kontinuierlichen Zuweisens von Ressourcenblöcken (10-1 bis 10-24), wobei dem Benutzer-Endgerät eine einzelne Gruppe von Ressourcenblöcken (10-1 bis 10-24), die auf der Frequenzachse zusammenhängend sind, zugewiesen wird, und eines diskreten Zuweisungsschemas des diskreten Zuweisens von Ressourcenblöcken (10-1 bis 10-24) zur Datenübertragung, wobei dem Benutzer-Endgerät eine Vielzahl von Unterblöcken zugewiesen werden, wobei jeder Unterblock aus einer Anzahl von Ressourcenblöcken (10-1 bis 10-24) zusammengesetzt ist und die diskrete Zuweisung so ist, dass jeder Unterblock aus Ressourcenblöcken (10-1 bis 10-24) besteht, die auf der Frequenzachse zusammenhängend sind, und das Intervall zwischen Unterblöcken zumindest ein Ressourcenblock ist, wobei die Basisstation ein Steuersignal zum Anzeigen eines Zuweisungsschemas, das aus dem kontinuierlichen Zuweisungsschema und dem diskreten Zuweisungsschema ausgewählt ist, und zum Anzeigen von Positionen von zwei Unterblöcken auf einer Frequenzachse überträgt, wenn das diskrete Zuweisungsschema angezeigt wird, wobei jeder Unterblock zwei oder mehr Ressourcenblöcke (10-1 bis 10-24) umfasst und die Unterblöcke durch ein Intervall von zumindest einem Ressourcenblock (10-1 bis 10-24) getrennt sind, **dadurch gekennzeichnet, dass** die dem Benutzer-Endgerät zugewiesenen Ressourcenblöcke (10-1 bis 10-24) mit einer ersten Anzahl von Bits des Steuersignals angezeigt werden, und ein Schalten zwischen dem kontinuierlichen Zuweisungsschema und dem diskreten Zuweisungsschema mit einem anderen Bit des Steuersignals angezeigt wird, und wobei das diskrete Zuweisungsschema nur zulässig ist, falls die Anzahl der zugewiesenen Ressourcenblöcke größer ist als ein erster Schwellenwert und kleiner ist als ein zweiter Schwellenwert.

3. Verfahren, das in einer Basisstation zum Zuweisen von Frequenzbereichen an das Benutzer-Endgerät unter Verwendung eines kontinuierlichen Zuweisungsschemas des kontinuierlichen Zuweisens von Ressourcenblöcken (10-1 bis 10-24) eingesetzt wird, wobei dem Benutzer-Endgerät ein einzelne Gruppe von Ressourcenblöcken (10-1 bis 10-24), die auf der Frequenzachse zusammenhängend sind, zugewiesen wird, und eines diskreten Zuweisungsschemas des diskreten Zuweisens von Ressourcenblöcken (10-1 bis 10-24) zur Datenübertragung, wobei dem Benutzer-Endgerät eine Vielzahl von Unterblöcken zugewiesen werden, wobei jeder Unterblock aus einer Anzahl von Ressourcenblöcken (10-1 bis 10-24) zusammengesetzt ist und die diskrete Zuweisung so ist, dass jeder Unterblock aus Ressourcenblöcken (10-1 bis 10-24) besteht, die auf der Frequenzachse zusammenhängend sind, und das Intervall zwischen Unterblöcken zumindest ein Ressourcenblock ist, wobei das Verfahren einen Schritt des Übertragens eines Steuersignals zum Anzeigen eines Zuweisungsschemas, das aus dem kontinuierlichen Zuweisungsschema und dem diskreten Zuweisungsschema ausgewählt ist, und zum Anzeigen von Positionen von zwei Unterblöcken auf einer Frequenzachse umfasst, wenn das diskrete Zuweisungsschema angezeigt wird, wobei jeder Unterblock zwei oder mehr Ressourcenblöcke (10-1 und 10-24) umfasst und die Unterblöcke durch ein Intervall von zumindest einem Ressourcenblock (10-1 bis 10-24) getrennt sind,
**dadurch gekennzeichnet, dass** die dem Benutzer-Endgerät zugewiesenen Ressourcenblöcke (10-1 bis 10-24) mit einer ersten Anzahl von Bits des Steuersignals angezeigt werden, und ein Schalten zwischen dem kontinuierlichen Zuweisungsschema und dem diskreten Zuweisungsschema mit einem anderen Bit des Steuersignals angezeigt wird, und wobei das diskrete Zuweisungsschema nur zulässig ist, falls die Anzahl der zugewiesenen Ressourcenblöcke größer ist als ein erster Schwellenwert und kleiner ist als ein zweiter Schwellenwert.

4. Benutzer-Endgerät, das Daten an eine Basisstation überträgt, die dem Benutzer-Endgerät Frequenzbereiche zuweist unter Verwendung eines kontinuierlichen Zuweisungsschemas des kontinuierlichen Zuweisens von Ressourcenblöcken (10-1 bis 10-24), wobei dem Benutzer-Endgerät eine einzelne Gruppe von Ressourcenblöcken (10-1 bis 10-24), die auf der Frequenzachse zusammenhängend sind, zugewiesen wird, und eines diskreten Zuweisungsschemas des diskreten Zuweisens von Ressourcenblöcken (10-1 bis 10-24) zur Datenübertragung,
wobei dem Benutzer-Endgerät eine Vielzahl von Unterblöcken zugewiesen werden, wobei jeder Unterblock aus einer Anzahl von Ressourcenblöcken (10-1 bis 10- 24) zusammengesetzt ist und die diskrete Zuweisung so ist, dass jeder Unterblock aus Ressourcenblöcken (10-1 bis 10-24) besteht, die auf der Frequenzachse zusammenhängend sind, und das Intervall zwischen den Unterblöcken zumindest ein Ressourcenblock ist, wobei das Benutzer-Endgerät ausgelegt ist, ein Steuersignal von der Basisstation zu empfangen, wobei das Steuersignal ein Zuweisungsschema anzeigt, das aus dem kontinuierlichen Zuweisungsschema und dem diskreten Zuweisungsschema ausgewählt ist, und Positionen von zwei Unterblöcken auf einer Frequenzachse anzeigt, wenn das diskrete Zuweisungsschema angezeigt wird, und Datenübertragung durchführt auf Grundlage des von der Basisstation empfangenen Steuersignals, und wobei jeder Unterblock zwei oder mehr Ressourcenblöcke (10-1 bis 10-24) umfasst und die Unterblöcke durch ein Intervall von zumindest einem Ressourcenblock (10-1 bis 10-24) getrennt sind,
**dadurch gekennzeichnet, dass** die dem Benutzer-Endgerät zugewiesenen Ressourcenblöcke (10-1 bis 10-24) mit einer ersten Anzahl von Bits des Steuersignals angezeigt werden, und ein Schalten zwischen dem kontinuierlichen Zuweisungsschema und dem diskreten Zuweisungsschema mit einem anderen Bit des Steuersignals angezeigt wird, und wobei das diskrete Zuweisungsschema nur zulässig ist, falls die Anzahl der zugewiesenen Ressourcenblöcke größer ist als ein erster Schwellenwert und kleiner ist als ein zweiter Schwellenwert.

## Revendications

1. Système de communication comprenant :
un terminal utilisateur ; et
une station de base adaptée pour attribuer des bandes de fréquence au terminal utilisateur à l'aide d'un système d'attribution continue consistant à attribuer de manière continue des blocs de ressources (10-1 à 10-24), où un ensemble unique de blocs de ressources (10-1 à 10-24), qui sont contigus sur l'axe des fréquences, est attribué au terminal utilisateur, et d'un système d'attribution discrète consistant à attribuer de manière discrète les blocs de ressource (10-1 à 10-24) pour une transmission de données,
où une pluralité de blocs secondaires sont attribués au terminal utilisateur,
où chaque bloc secondaire se compose d'un certain nombre de blocs de ressources (10-1 à 10-24), et l'attribution discrète est telle que chaque bloc secondaire se compose des blocs de ressource (10-1 à 10-24) qui sont contigus sur l'axe des fréquences, et l'intervalle entre les blocs secondaires est au moins égal à un bloc de ressources,
où la station de base transmet un signal de commande destiné à indiquer un système d'attribution sélectionné parmi le système de réduction continue et le système d'attribution discrète, et à indiquer les emplacements de deux blocs secondaires sur un axe des fréquences lorsque le système d'attribution discrète est indiqué,
où chaque bloc secondaire comprend deux blocs de ressources ou plus (10-1 à 10-24), et les blocs secondaires sont séparés par un intervalle au moins égal à un bloc de ressources, et le terminal utilisateur exécute la transmission de données sur la base du signal de commande reçu en provenance de la station de base,
**caractérisé en ce que** les blocs de ressources (10-1 à 10-24) attribués au terminal utilisateur sont indiqués par un premier nombre de bits du signal de commande, et une commutation entre le système d'attribution continue et le système d'attribution discrète, est indiquée par un autre bit du signal de commande, et
où le système d'attribution discrète n'est autorisé que si le nombre de blocs de ressources attribués est supérieur à un premier seuil et inférieur à un second seuil.

2. Station de base adaptée pour attribuer des bandes de fréquence au terminal utilisateur à l'aide d'un système d'attribution continue consistant à attribuer continuellement des blocs de ressources (10-1 à 10-24), où un ensemble unique de blocs de ressources (10-1 à 10-24), qui sont contigus sur l'axe des fréquences, est attribué au terminal utilisateur, et d'un système d'attribution discrète consistant à attribuer de manière discrète les blocs de ressource (10-1 à 10-24) pour une transmission de données,
où une pluralité de blocs secondaires sont attribués au terminal utilisateur,
où chaque bloc secondaire se compose d'un certain nombre de blocs de ressources (10-1 à 10-24), et l'attribution discrète est telle que chaque bloc secondaire se compose des blocs de ressource (10-1 à 10-24) qui sont contigus sur l'axe des fréquences, et l'intervalle entre les blocs secondaires est au moins égal à un bloc de ressources,
où la station de base transmet un signal de commande destiné à indiquer un système d'attribution sélectionné parmi le système de réduction continue et le système d'attribution discrète, et à indiquer les emplacements de deux blocs secondaires sur un axe des fréquences lorsque le système d'attribution discrète est indiqué,
où chaque bloc secondaire comprend deux blocs de ressources ou plus (10-1 à 10-24), et les blocs secondaires sont séparés par un intervalle au moins égal à un bloc de ressources (10-1 à 10-24),
**caractérisé en ce que** les blocs de ressources (10-1 à 10-24) attribués au terminal utilisateur sont indiqués par un premier nombre de bits du signal de commande, et une commutation entre le système d'attribution continue et le système d'attribution discrète, est indiquée par un autre bit du signal de commande, et
où le système d'attribution discrète n'est autorisé que si le nombre de blocs de ressources attribués est supérieur à un premier seuil et inférieur à un second seuil.

3. Procédé utilisé dans une station de base adaptée afin d'attribuer des bandes de fréquence au terminal utilisateur à l'aide d'un système d'attribution continue consistant à attribuer continuellement des blocs de ressources (10-1 à 10-24), où un ensemble unique de blocs de ressources (10-1 à 10-24), qui sont contigus sur l'axe des fréquences, est attribué au terminal utilisateur, et d'un système d'attribution discrète consistant à attribuer de manière discrète les blocs de ressource (10-1 à 10-24) pour une transmission de données, où une pluralité de blocs secondaires sont attribués au terminal utilisateur,
où chaque bloc secondaire se compose d'un certain nombre de blocs de ressources (10-1 à 10-24), et l'attribution discrète est telle que chaque bloc secondaire se compose des blocs de ressource (10-1 à 10-24) qui sont contigus sur l'axe des fréquences, et l'intervalle entre les blocs secondaires est au moins égal à un bloc de ressources,
où le procédé comprend une étape consistant à transmettre un signal de commande destiné à indiquer un système d'attribution sélectionné parmi le système de réduction continue et le système d'attribution discrète, et à indiquer les emplacements de deux blocs secondaires sur un axe des fréquences lorsque le système d'attribution discrète est indiqué,
où chaque bloc secondaire comprend deux blocs de ressources ou plus (10-1 à 10-24), et les blocs secondaires sont séparés par un intervalle au moins égal à un bloc de ressources (10-1 à 10-24),
**caractérisé en ce que** les blocs de ressources (10-1 à 10-24) attribués au terminal utilisateur sont indiqués par un premier nombre de bits du signal de commande, et une commutation entre le système d'attribution continue et le système d'attribution discrète, est indiquée par un autre bit du signal de commande, et
où le système d'attribution discrète n'est autorisé que si le nombre de blocs de ressources attribués est supérieur à un premier seuil et inférieur à un second seuil.

4. Terminal utilisateur transmettant des données à une station de base qui attribue des bandes de fréquence au terminal utilisateur à l'aide d'un système d'attribution continue consistant à attribuer continuellement des blocs de ressources (10-1 à 10-24), où un ensemble unique de blocs de ressources (10-1 à 10-24), qui sont contigus sur l'axe des fréquences, est attribué au terminal utilisateur, et d'un système d'attribution discrète consistant à attribuer de manière discrète les blocs de ressource (10-1 à 10-24) pour une transmission de données,
où une pluralité de blocs secondaires sont attribués au terminal utilisateur,
où chaque bloc secondaire se compose d'un certain nombre de blocs de ressources (10-1 à 10-24), et l'attribution discrète est telle que chaque bloc secondaire se compose des blocs de ressource (10-1 à 10-24) qui sont contigus sur l'axe des fréquences, et l'intervalle entre les blocs secondaires est au moins égal à un bloc de ressources,
où le terminal utilisateur est adapté pour recevoir un signal de commande en provenance de la station de base, le signal de commande indiquant un système d'attribution sélectionné parmi le système d'attribution continue et le système d'attribution discrète, et indiquant les emplacements de deux blocs secondaires sur un axe des fréquences lorsque le système d'attribution discrète est indiqué, et exécute une transmission de données sur la base du signal de commande reçu en provenance de la station de base, et
où chaque bloc secondaire comprend deux blocs de ressources ou plus (10-1 à 10-24), et les blocs secondaires sont séparés par un intervalle au moins égal à un bloc de ressources (10-1 à 10-24),
**caractérisé en ce que** les blocs de ressources (10-1 à 10-24) attribués au terminal utilisateur sont indiqués par un premier nombre de bits du signal de commande, et une commutation entre le système d'attribution continue et le système d'attribution discrète, est indiquée par un autre bit du signal de commande, et
où le système d'attribution discrète n'est autorisé que si le nombre de blocs de ressources attribués est supérieur à un premier seuil et inférieur à un second seuil.
